# EUROPEAN PATENT SPECIFICATION

(11) **EP 1 171 533 B1**
(45) Date of publication and mention of the grant of the patent: **17.08.2005**
(21) Application number: 00928170.0
(22) Date of filing: 14.04.2000
(51) Int. Cl.: C09D 11/00, C09D 11/02, C09D 5/02, C09D 7/12, C09D 17/00

(54) **INKJET INK AND INK COMPOSITIONS CONTAINING HIGH SURFACE AREA CARBON PRODUCTS**
TINTENSTRAHLDRUCKTINTE UND TINTENZUSAMMENSETZUNGEN, ENTHALTEND KOHLENSTOFFPRODUKTE MIT HOHER SPECIFIZER OBERFLÄCHE
ENCRE DESTINEE A L'IMPRESSION A JET D'ENCRE ET COMPOSITIONS D'ENCRE CONTENANT DES PRODUITS DE CARBONE A SURFACE ELEVEE

(30) Priority: 15.04.1999 US 129338 P
(43) Date of publication of application: 16.01.2002
(73) Proprietor: CABOT CORPORATION, Boston, Massachusetts 02210-2019 (US)
(72) Inventor: BIAN, Nanying, Nashua, NH 03062 (US)
(74) Representative: Trueman, Lucy Petra
(86) International application number: PCT/US2000/009990
(87) International publication number: WO 2000/063306

(56) References cited:
- EP-A- 0 805 191
- EP-A- 0 896 986

## Description

### BACKGROUND OF THE INVENTION

### 1. Field of the Invention.

The present invention relates to ink compositions, and especially inkjet ink compositions, and the carbon products and modified carbon products used in the ink compositions.

### 2. Discussion of the Related Art.

Inkjet printing is a non-impact process wherein droplets of ink are produced and deposited on a substrate such as paper, transparent film, or textile material in response to an electronic signal. Typical inkjet printing systems are continuous stream or drop-on-demand type. In continuous inkjet systems, ink is emitted in a continuous stream under pressure through at least one orifice or nozzle. The stream is perturbed causing it to break up into droplets at a fixed distance from the orifice. At the breakup point, the droplets are charged in accordance with digital data signals and passed through an electrostatic field. The field adjusts the trajectory of each droplet to direct it to a gutter for recirculation or to a specific location on a recording medium to create images. In drop-on-demand systems, a droplet is expelled from an orifice directly to a position on a recording medium by pressure generated in accordance with digital data signals. A droplet is not formed or expelled unless it is to be placed on the recording medium. The drop-on-demand system has several advantages over the continuous system in that it requires no ink recovery, charging, or deflection.

Generally, there are three basic types of drop-on-demand inkjet systems. The first type is known as a piezoelectric system. In one kind of piezoelectric printer, ink fills a channel with a nozzle on one end and a piezoelectric transducer produces pressure pulses near the other end.

A second type of drop-on-demand system is known as thermal inkjet or bubble jet. The major components are an ink-filled channel with a nozzle at one end and a heat generating resistor near the nozzle. Printing signals create an electric current pulse in a resistive layer within each ink passageway, causing the ink in the immediate vicinity to vaporize, creating a bubble. Some of the ink in the channel is forced out through the orifice as a propelled droplet due to bubble expansion. Thermal or bubble inkjet printers produce high velocity droplets and allow very close spacing of nozzles, which results in a high quality of print.

The third type of drop-on-demand inkjet device is known as an acoustic ink printer. This printer utilizes a focused acoustic beam formed with a spherical lens illuminated by a plane wave of sound created by a piezoelectric transducer. The focused acoustic beam exerts pressure on the surface of the liquid, resulting in the ejection of small droplets of ink onto an imaging substrate.

Conventional inks for inkjet printers generally comprise a colorant such as dye which is soluble in a vehicle of water or a mixture comprising water and a water-soluble or water-miscible organic solvent. However, dyes have several disadvantages when used in inkjet inks. Dyes, being water-soluble or soluble in a water and organic mixture, may redissolve and run when exposed to moisture or water. Dye images may smear and rub off on contact with felt pen markers or upon being rubbed with a finger. Dyes may also exhibit poor light stability, including fluorescent, sunlight, and ultraviolet light. Inks comprising soluble dyes may also exhibit clogging of the jetting channels due to solvent evaporation and changes in the dye's solubility, dye crystallization, and the presence of impurities. Dye-based ink may also exhibit poor thermal and chemical stability which could result in poor print quality. The dye may also bleed or diffuse into pores or along fibers of the paper, thus causing poor print quality and low optical density of the image.

Pigments have also been used as colorants in inkjet inks, either as substitutes for, or in combination with, dyes. Pigments offer properties superior to dyes in areas such as waterfastness, lightfastness, image density, thermal stability, oxidative and chemical stability, compatibility with other colorants, and compatibility with both coated/treated and plain papers. Pigments used in inkjet inks include carbon black, titanium dioxide, cobalt blue (CoO-Al₂O₃), chrome yellow (PbCrO₄), phthalocyanine blue, and other organic pigments. Other pigments include inorganic and polymer pigments, wherein these pigments and organic pigments can have dyes absorbed and/or incorporated therein. Carbon black, which absorbs in the infrared region, may be used for bar code reading.

The major problem with the use of such pigments in inkjet systems is initial dispersibility and dispersion stability. Pigment particles such as carbon black generally start in a clumped or agglomerated state. To prepare inkjet inks, however, the carbon black must be dispersed and stabilized in that form because the extent of dispersion directly affects inkjet printing characteristics such as ejectability, print quality, optical density, and the like. Additionally, since the nozzle openings of thermal or bubble type inkjet printers are typically about 10-60 micrometers in diameter, it is critical to ensure that the inkjet inks do not clog or plug these openings. Thus, it is necessary to make the pigment particles as small as possible. Preferably carbon black is reduced to individual aggregates. Small pigment particles are also less prone to settling during storage and therefore further contribute to the stability of the pigment dispersion.

In light of these requirements, conventional aqueous pigment-based inkjet inks generally contain an aqueous ink vehicle, a pigment, a dispersant, and a humectant to prevent drying of ink or the clogging of orifices. Further additives such as biocides, binders, salts, driers, penetrants, surfactants, and the like may also be included.

The conventional inks, whether containing a colorant which is a dye, a pigment or a combination thereof, require improvement in a number of properties. In particular, it is desirable to decrease drying time of the ink, increase water and smear resistance of the images, increase optical density and gloss of the print, and provide better quality images with less intercolor bleed.

### SUMMARY OF THE INVENTION

A feature of the present invention is to provide ink compositions wherein one or more properties are improved.

Another feature of the present invention is to provide ink compositions, namely inkjet ink compositions, wherein at least one or more properties are improved.

A further feature of the present invention is to provide ink compositions having improved optical density and/or gloss properties when an image is produced from the ink compositions.

An additional feature of the present invention is to provide methods of making these ink compositions.

Additional features and advantages of the present invention will be set forth in part in the description which follows, and in part will be apparent from the description or may be learned by practice of the present invention. The objectives and other advantages of the present invention will be realized and obtained by means of the elements and combinations particularly pointed out in the written description and appended claims.

To achieve these and other advantages and in accordance with the purpose of the present invention, as embodied and broadly described herein, the present invention relates to an ink composition, preferably, an inkjet ink composition, comprising at least one ink vehicle, and at least one carbon product having a BET surface area of from 900 to 2200 m²/g.

The present invention further relates to an ink composition, preferably, an inkjet ink composition, comprising at least one ink vehicle, and at least one modified carbon product comprising a carbon product having attached at least one organic group, wherein the BET surface area of the carbon product is from 900 to 2200 m²/g. Optionally, the organic group is substituted with at least one ionic group, ionizable group, or both.

In addition, the present invention relates to modified carbon products comprising at least one carbon product having attached at least one organic group, wherein the carbon product has a BET surface area of at least 900 m²/g. Optionally, the organic group is substituted with at least one ionic group, ionizable group, or both.

The present invention further relates to methods to increase optical density, intercolor bleed resistance, and/or gloss of a printed image. The method involves incorporating into an ink a carbon product having a BET surface area of at least 625 m²/g. The method also involves incorporating into an ink a modified carbon product comprising a carbon product having attached at least one organic, wherein the carbon product has a BET surface area of at least 900 m²/g. Optionally, the organic group is substituted with at least one ionic group, ionizable group, or both.

Also, the present invention relates to inkjet recording methods which include the step of applying to a recording medium ink droplets discharged from orifices of an inkjet recording head. The ink droplets are formed from the inkjet ink formulation described above.

It is to be understood that both the forgoing general description and the following detailed description are exemplary and explanatory only and are intended to provide further explanation of the present invention, as claimed.

### DETAILED DESCRIPTION OF THE CURRENT EMBODIMENTS

The present invention relates to ink compositions comprising at least one ink vehicle and at least one carbon product having a BET surface area of at least 900 m²/g to 2200 m²/g. In another embodiment, the carbon products are modified carbon products having attached at least one organic group. The organic group is preferably further substituted with at least one ionic group, ionizable group, or both. Lastly, the present invention relates to the modified carbon products themselves having a BET surface area of at least 900 m²/g. It has been found that this rather high surface area leads to unexpected property benefits for ink compositions, such as but not limited to, inkjet ink compositions. BET surface area is determined by nitrogen adsorption capacity using the Brunauer-Emmet-Teller procedure.

Preferred ranges of BET surface area for the carbon product include from 900 to about 2000 m²/g; and from about 1000 to about 2000 m²/g. Other ranges within the broad ranges described herein are also part of the present invention and can be used. The surface area described above is the surface area for the aggregate of the carbon product. Examples of such carbon products include Black Pearls® 2000 carbon black available from Cabot Corporation and carbon blacks available from Mitsubishi Chemical Corporation and Columbian. Other examples include Printex XE2 from Degussa.

The carbon product which is used has a high surface area as described above and preferably has a morphology which can be characterized as particles having macro-pores, micro-pores, and meso-pores which all contribute to the formation of high surface areas.

The carbon products, by measurement of the primary aggregates, used in the present invention also preferably have a DBP (oil absorption value as measured by ASTM-2414 using Dibutyl-phthalate) of at least about 50 cc/100g. More preferably, the carbon products have a DBP of from about 50 to about 400 cc/100g and more preferably from about 100 to about 360 cc/100g.

As stated above, a modified carbon product can be used in the present invention. The carbon product which is modified to form the modified carbon product is any carbon product capable of having attached at least one organic group. In particular, the carbon product is preferably capable of reacting with a diazonium salt to form the above-mentioned modified carbon product. The carbon product may be of the crystalline or amorphous type. Examples include, but are not limited to, graphite, carbon black, vitreous carbon, activated charcoal, activated carbon, and combinations thereof. Finely divided forms of the above are preferred. Also, it is possible to utilize mixtures of different products.

For purposes of the present invention, the carbon product can also be an aggregate comprising at least one carbon phase and at least one silicon-containing species phase. The carbon product can also be a partially silica coated carbon black; or can be an aggregate comprising at least one carbon phase and a metal-containing species phase. For each of these carbon products, at least one organic group can also be attached. A further description of these pigments can be found in U.S. Patent No. 5,830,930; 5,863,323; 5,747,562; 5,622,557; and International Publication No. WO 98/13428.

For purposes of the present invention, the organic group which is attached to the carbon product to form the modified carbon product preferably contains at least one aromatic group and/or alkyl group, such as a C₁-C₂₀ alkyl group. Preferably, the organic group is a -C₆H₄COO⁻X⁺ or -C₆H₄SO₃⁻ X⁺, where X⁺ is a counterion like Na⁺. The organic groups that can be attached onto the carbon product can be any of the organic groups described in U.S. Patent Nos. 5,851,280; 5,837,045; 5,803,959; 5,672,198; 5,571,311; 5,630,868; 5,707,432; 5,803,959; 5,554,739; 5,698,016; 5,713,988; and International Publication Numbers WO 96/18688; WO 97/47697; WO 99/07794; and WO 97/47699, and the pending U.S. Patent Application filed April 2, 1999, entitled "Modified Pigments Having Improved Dispersing Properties". Further, these patents, publications, and application provide preferred methods for attaching the organic group onto the carbon product.

Preferably, the amount of treatment onto the carbon product to form the modified carbon product having attached at least one organic group is any amount which can be attached onto the carbon product and includes treatment levels from about 0.1 to about 5.0 micromoles/m² of carbon product. Preferably, treatment levels of from about 2.0 to about 4.0 micromoles/m² of carbon product are used when the organic group is a para-aminobenzoic acid group or other similar group. The treatment level is preferably below 3 micromoles/m² when the organic group attached is a quaternary ammonium group or the like. Preferably the carbon product does not have complete coverage of attached organic groups. In other words, less than all of the total reactive sites are used on the carbon product to attach organic groups.

The modified carbon products of the present invention may be used in aqueous or solvent based compositions optionally containing conventional pigments. The following relating to ink compositions can be similarly applicable to other liquid systems, including, for example, coatings, papers, inks, toners, adhesives, latexes, textiles, and fibers.

Further, U.S. Patent Nos. 5,851,280; 5,837,045; 5,803,959; 5,672,198; 5,571,311; 5,630,868; 5,707,432; 5,803,959; 5,554,739; 5,698,016; 5,713,988; and International Publication Nos. WO 97/47697; WO 97/47699; and WO 99/05575, describe the incorporation of carbon black and/or other pigments in coatings, paper, inks, textiles, and/or toners, and the like which can be applied equally here for the modified carbon products of the present invention.

Furthermore, preferably the modified carbon products contain more than one type of organic group. In particular, it is preferred for purposes of the present invention that the carbon products have attached at least two different types of organic groups. More preferably, the carbon products have attached at least one organic group which is non-ionic such as tripropylene glycol monomethyl ether 4-benzoate and also have attached at least one organic group which also contains at least one ionic or ionizable group, or both. Such carbon products which have at least two different types of organic groups are shown to have improved jetting properties for a printed image resulting from the ink composition containing this type of modified carbon product.

Ink compositions containing the carbon products or the modified carbon products of the present invention have been found suitable for use in imaging applications, particularly for use in inkjet inks. Such ink and inkjet ink compositions preferably exhibit improved formulation properties and storage stability.

The carbon products or the modified carbon products of the present invention are present in the aqueous or solvent based ink or inkjet ink composition in an amount effective to provide the desired image quality, e.g., optical density, without detrimentally affecting the performance of the ink. Typically, the carbon products or modified carbon products can be present in an amount ranging from about 1% to about 20%, preferably from about 2% to about 10%, based on the weight of the ink composition. In addition, the carbon products or modified carbon products are typically as small as possible to enable a stable colloidal suspension of the pigment in the liquid vehicle and to prevent clogging of the ink channels and nozzles when used in the desired printing application. For example, a preferred average particle size of the carbon product or modified carbon product for use in a thermal inkjet printer are generally below 1.0 micron, preferably in a range from about 0.01 micron to about 0.3 micron.

The ink compositions of the present invention may be prepared utilizing conventional techniques known to those skilled in the art, such as combining or mixing the desired component in a suitable ink vehicle, i.e., an aqueous or solvent based medium. When the ink and inkjet ink compositions are aqueous based systems, a significant amount of water, preferably deionized or distilled water, is typically used. For example, the amount of water or similar medium is generally present in an amount ranging from about 50% to about 95%, preferably from about 60% to about 80%, based on the weight of the ink or inkjet ink composition.

The ink and inkjet ink compositions of the present invention may be buffered to the desired pH by the addition of a suitable base, such as sodium hydroxide, ammonium hydroxide, triethylamine, dimethylethanolamine, and the like, or a suitable acid, such as mineral acids, hydrochloric acid, sulfuric acid, and the like. In addition, a polymer which is soluble in the ink or inkjet ink composition may be added to improve the waterfastness, rub resistance, and/or smear resistance of the images generated from these compositions. By "soluble" is meant that the polymer will dissolve in the ink vehicle to form a one phase or stable emulsion system. These polymers include, for example, polyvinyl alcohol, polyester, polyestermelamine, styrene-acrylic acid copolymers, styrene-maleic acid copolymers, styrene-maleic acid-alkyl acrylate copolymers, styrene-methacrylic acid copolymers, styrene-methacrylic acid-alkyl acrylate copolymers, styrene-maleic half ester copolymers, vinyl napthalene-acrylic acid copolymers, vinyl napthalene-maleic acid copolymers and salts thereof. Additional polymers include polyvinylimidazole, derivatives of polyvinylimidazole, copolymers of vinylimidazole, copolymers of vinylimidazole derivatives, polyvinylpyridine, derivatives of polyvinylpyridine, copolymers of vinylpyridine, copolymers of vinylpyridine derivatives, polyethyleneimine, derivatives of polyethyleneimine, and mixtures thereof, as described in PCT Publication No. WO 96/18688.

Suitable additives can also generally be incorporated into the ink or inkjet ink composition to impart a number of desired properties while maintaining the stability of the compositions. For example, a surfactant or suitable polymer may be used to further enhance the colloidal stability of the ink composition. Other additives are well known in the art and include humectants, biocides, binders, drying accelerators, penetrants, and the like. Examples of humectants include ethylene glycol, propylene glycol, diethylene glycol, glycerine, dipropylene glycol, polyethylene glycol, polypropylene glycol, alkane diols, amides, ethers, carboxylic acids, esters, alcohols, organosulfides, organosulfoxides, sulfones, alcohol derivatives, 2-pyrrolidone, ether derivatives, amino alcohols, and ketones. The amount of a particular additive will vary depending on a variety of factors but are generally present in an amount ranging between 0% and 40%, preferably between 0.1% and 10%, although the amount may be outside this range. Certain counter-anions, such as polyhydroxylated acids, can serve as the humectant as well when associated with the pigment. This advantage avoids the use of free humectants in the compositions.

Printed images may be generated from the ink or inkjet ink compositions of the present invention by incorporating such compositions into a suitable printing apparatus, and generating an image onto a substrate. Suitable inkjet printers include, for example, thermal printers, piezoelectric printers, continuous printers, valve printers, and the like. Similarly, any suitable substrate can be employed including plain papers, bonded papers, coated papers, transparency materials, textile materials, plastics, polymeric films, inorganic substrates, and the like.

The ink compositions containing the carbon products or modified carbon products of the present invention preferably have improved optical density for the image printed from such ink compositions. The carbon products or modified carbon products can also improve intercolor bleed resistance and/or provide a higher gloss of the printed image.

The carbon products or modified carbon products of the invention, either as predispersion or as a solid, can be incorporated into an ink composition using standard techniques. Use of a water dispersible or solvent-dispersible modified carbon product of the invention can provide a significant advantage and cost savings by reducing or eliminating the milling steps generally used with other conventional pigments.

The carbon products or modified carbon products of the invention can further be used in news inks. For example, a news ink composition may comprise an ink vehicle (e.g., water), the carbon products or modified carbon products of the invention, a resin, and optional conventional additives such as antifoam additives or a surfactant.

The carbon products or modified carbon products of the invention may also be used in phase change (hot melt) inks. Phase change inks generally include at least one colorant and at least one phase change or wax carrier (e.g., a fatty amide-containing material like a mixture of a tetra-amide compound and a mono-amide compound, or an alkanolamides and polyethylene glycol mixture). The phase change ink is in a solid phase at ambient temperature and in a liquid phase at an elevated operating temperature of the printer. When the ink is heated it melts to form a low viscosity fluid that can be ejected as droplets. Upon jetting, heated droplets impact on a substrate, and cool to ambient temperature forming films of uniform thickness. Subsequent impaction of the droplets on the substrate may also occur, depending upon the type of printer used. Use of carbon products or modified carbon products can provide a significant advantage in dispersion stability and carrier compatibility over conventional pigments and in light-fastness over dyes.

The carbon products or modified carbon products of the present invention can also be used in lithographic or flexographic printing. For example, the ink or fountain solution used in the printing process can contain the carbon products or modified carbon products of the present invention. Flexographic inks generally include a colorant, a binder, and a solvent. The carbon products or modified carbon products of the invention are useful as flexographic ink colorants.

The carbon products or modified carbon products of the present invention can also be used in the manufacture of lithographic printing plates, such as infrared or near-infrared laser-imageable printing plates. Typically, imaging occurs when the plate is exposed to radiation having wavelengths of between 800 and 1100 nm. Generally, an infrared or near-infrared laser-imageable lithographic printing plate includes at least the following layers: a grained-metal or polyester plate or sheet-like substrate and a radiation-absorptive layer coated thereon. Protective layers for the substrate or the surface of the coated plate may also be used in the present invention. When coated onto the substrate, the protective layer can also serve as an adhesion-promoting primer. Other layers may be used, for example, to improve adhesion between layers and durability of the printing plate. The radiation-absorptive layer contains the carbon products or modified carbon products of the present invention along with other conventional ingredients, such as resins and binders. In the imaging process, a lithographic printing plate is selectively exposed to a laser output or other source capable of removing or chemically modifying the radiation-absorbent layer or layers adjacent thereto. The laser output will define a pattern on the printing plate and remove or modify only those portions of the radiation-absorptive layer which define the pattern. Afterwards, the printing plate can be further developed by subjecting it to a solvent capable of removing the imaged layer(s), if any remains, which defines the same pattern. The details of the various conventional components and techniques for such printing plates are described in U.S. Patent No. 5,493,971; EP 0 803 771 A1; EP 0 770 494 A2; EP 0 770495 A1; as well as PCT Publication WO-98/31550 and the patents and publications referenced therein.

The carbon products or modified carbon products of the invention may also be used in coating compositions such as paints or finishes, or the like. Thus, an embodiment of the invention is a coating composition comprising an aqueous or nonaqueous vehicle, resin or binder, and a carbon product or modified carbon product. Other known coating additives may be incorporated in the coating compositions. See, for examples, McGraw-Hill Encyclopedia of Science & Technology, 5th Ed. (McGraw-Hill, 1982), incorporated herein by reference. See also United States Patents Nos. 5,051,464; 5,319,044; 5,204,404; 5,051,464; 4,692,481; 5,356,973; 5,314,945; 5,266,406; and 5,266,361.

The carbon products or modified carbon products of the invention, either as a predispersion or as a solid, can be incorporated into a coating composition using standard techniques. Use of a water or solvent dispersible modified carbon product provides a significant advantage and cost savings by reducing or eliminating the milling steps generally used with other conventional pigments.

As noted above, the carbon products or modified carbon products of the present invention may be used in other aqueous or solvent based systems including, but not limited to, coatings, paints, papers, adhesives, latexes, toners, textiles and fibers. For example, the aqueous or solvent based systems may be prepared by combining or mixing the carbon products or modified carbon products with suitable resins, such as alkyds, acrylics, polyesters, silicates, urethanes, epoxies and the like.

The present invention will be further clarified by the following examples, which are intended to be purely exemplary of the present invention.

### EXAMPLES

### Example 1: Preparation of Dispersions Containing Modified Carbon Products

A solution of 49.4 g of p-aminobenzoic acid (PABA) in 1000 mL of water was combined in a suitable mixer with 600 g of carbon black A (surface area: 200 m²/g and DBP: 117 mL/100g) and the resultant mixture heated at 70 °C. To this was added 24.8 g of sodium nitrite dissolved in 200 g of deionized water and the mixing continued at 70 °C for 2-3 hours. During this time, bubbles were released as the diazonium salt N₂⁺C₆H₄COO⁻ was formed and reacted with the carbon black. The resulting dispersion was first centrifuged with a Carr continuous centrifuge at a G force of about 15,000 and at a flow rate of about 600 mL/min, and then purified by ultrafiltration/diafiltration until the permeate was colorless and filtered to 0.5 micron. The modified carbon product of dispersion **1A** had attached -C₆H₄COO⁻ groups and the corresponding counterion was Na⁺. The same procedure was used to prepare dispersion **1B,** except carbon black **B** (surface area: 1500 m²/g and DBP: 330 mL/100g) was used. The corresponding amount of reagents that were used are shown in Table 1. The amounts of carbon black **A** and **B** used were different when the chemical modifications were performed in the same mixer in the same manner. This is mainly due to the density difference of the two carbon blacks. In this case, carbon black A has a density of 19 lbs/ft³ and carbon black **B** has a density of 9 lbs/ft³.

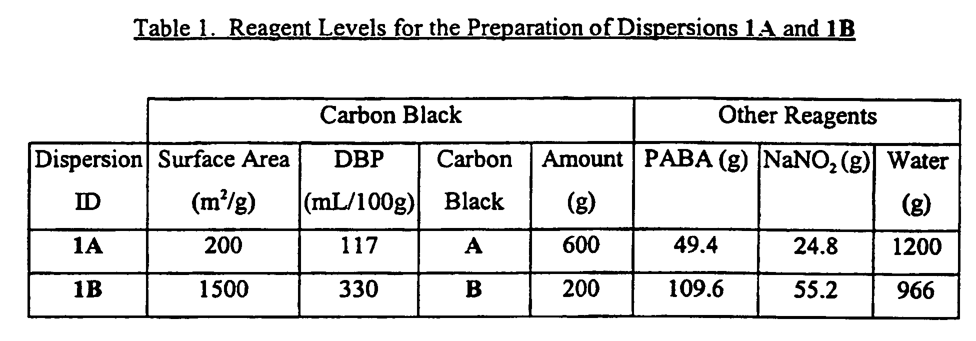

### Example 2: Draw Down Optical Density

This example shows that the dispersion made from the high DBP, high surface area carbon black **B** has higher optical density. Dispersions **1A** and **1B** were diluted to 5% with water and were drawn down on Xerox 4024 paper using a 3 mil Bird applicator with a Byk-Gardner automatic draw down device. The resulting films were measured for optical density using a MacBeth 915 optical densitometer. The results are reported in Table 2.

**Table 2.**

| Optical Density (Drawdown) | |
|---|---|
| Dispersion ID | Optical Density |
| **1A** | 1.66 |
| **1B** | 1.84 |

### Example 3: Print Optical Density

This example shows that inks made from the dispersions containing modified carbon black **B,** having high DBP and high surface area, display higher optical density. Dispersions **1A** and **1B** were formulated into an ink with 10% pyrrolidinone, 10% 1,4-butanediol, and 4% IPA (isopropyl alcohol) at a 5% pigment loading (dry basis), with the balance being water. The corresponding inks are identified as **3A** and **3B** respectively. They were printed using a Lexmark Color Jetprinters Series 7000 on three different papers: Springhill Relay DP, Comp USA, and HP Multipurpose. The results are reported in Table 3.

**Table 3.**

| Optical Density (Print) | | |
|---|---|---|
| Paper | **3A** | **3B** |
| Springhill Relay DP | 1.25 | 1.49 |
| Comp USA | 1.57 | 1.77 |
| HP Multipurpose | 1.52 | 1.75 |

### Example 4: Black-to-Color Bleed

This example shows that inks made from the dispersions containing modified carbon black **B,** having high DBP and high surface area, show improved black-to-color bleed properties when printed along with colors. Both inks **3A** and **3B** were printed on Champion Laser paper as a colored graph along with Lexmark Black Ink 12A9170 for comparison purposes. The three prints were compared for black-to-color bleed performance by examination under a 10x loop. A scale of 0-10 was set, with higher numbers designated as better black-to-color bleed. As shown in Table 4, the Lexmark Black Ink 12A9170 was the poorest performer whereas ink **3B** was the best.

**Table 4.**

| Black-to-Color Bleed Properties | |
|---|---|
| Ink | Rating |
| Lexmark Black 12A9170 | 5 |
| **3A** | 6 |
| **3B** | 9 |

### Example 5: Synthesis of Tripropylene Glycol Monomethyl Ether 4-Nitrobenzoate (TPMN)

This example describes the synthesis of TPMN, which is the precursor to the treating reagent TPMA. A 250 mL three-neck round-bottom flask was equipped with a thermometer, a pressure-equalizing dropping funnel, a magnetic spin bar, and a refluxing condenser with a KOH drying tube. The flask was placed in an ice-bath on a magnetic stirrer. 4-Nitrobenzoyl chloride (9.3g) and 50 mL of toluene were added to the flask first. Then the mixture of tripropylene glycol monomethyl ether (TPM, 10.31g), and triethyl amine in toluene (~100 mL) was added to the flask dropwise through the dropping funnel. After the addition, the ice-bath was removed and a heating mantel was put on, and the reaction was refluxed at 90-100°C for 4-5 hrs. The reaction mixture was cooled down to room temperature and passed through a Buchner funnel (with qualitative filter paper, Whatman No. 10). The filtrate was put into a separatory funnel, washed with 5 % (w/w) potassium carbonate twice and 5 % sodium chloride once, and then dried over sodium sulfate for 0.5 hr. The drying agent was filtered out by gravity filtration through a glass funnel with a piece of cotton. The filtrate was placed in a rotary evaporator to remove the toluene, leaving a solid (tripropylene glycol monomethyl ether 4-nitrobenzoate (TPMN)). Identification of the nitro ester was determined by NMR (using a Varian 400 MHz, Model 400VXR NMR instrument with CDCl₃ as solvent).

TPMN was dissolved in methanol (100mL) in a hydrogenation flask containing platinum oxide (0.1 g). The flask was put into a hydrogenation apparatus (Parr Corp.), and the sample was reduced (as evidenced by no further change of hydrogen pressure and a color change from yellow to red to pale yellow) forming tripropylene glycol monomethyl ether 4-aminobenzoate (TPMA). Identification of the amine ester was determined using NMR procedure and conditions described above.

### Example 6: Preparation of a Dispersion Containing a Modified Carbon Product

This example illustrates the preparation of a dispersion containing carbon black **B** modified with PABA and TPMA together. Diluted nitric acid (100g, 10 % (w/w)) and 32.5 g of TPMA were combined in a suitable mixer with 123.4 g of PABA, 200 g of carbon black **B** and the resultant mixture was heated at 70 °C. To this was added 69 g of sodium nitrite dissolved in 400 g of deionized water and the mixing continued at 70 °C for 2-3 hours. During this time, bubbles were released as the diazonium salts N₂⁺C₆H₄COO⁻ and N₂⁻C₆H₄COO(C₃H₆O)₃CH₃ were formed and reacted with carbon black. The resulting dispersion was first centrifuged with a Carr continuous centrifuge at a G force of about 15,000 and at a flow rate of about 600 mL/min, and then purified by ultrafiltration/diafiltration until the permeate was colorless and filtered to 0.5 micron. The modified carbon product of this dispersion (6B) had attached -C₆H₄COO(C₃H₆O)₃CH₃ groups and -C₆H₄COO⁻ groups with a corresponding Na⁺ counterion.

### Example 7: Print Optical Density

This example contrasts the performance of an ink prepared from dispersion **6B** which contains carbon black **B** modified with both PABA and TPMA to an ink prepared from dispersion **1B** which contains carbon black **B** modified with PABA only. The dispersions **1B** and **6B** were formulated into an ink with 10% pyrrolidinone, 10% 1,4-butanediol, and 4% IPA at a 5% pigment loading (dry basis), with the balance being water. The corresponding inks are **3B** and **7B** respectively. They were printed using a Lexmark Color Jetprinters Series 7000 on three different papers: Springhill Relay DP, Comp USA, and HP Multipurpose. The results are reported in Table 5.

**Table 5.**

| Optical Density (Print) | | |
|---|---|---|
| **Paper** | **3B** | **7B** |
| Springhill Relay DP | 1.49 | 1.19 |
| Comp USA | 1.77 | 1.7 |
| HP Multipurpose | 1.75 | 1.48 |

This example shows that ink **7B** has a lower optical density, presumably due to greater penetration into the paper. In addition, ink **7B** showed better jetting properties evidenced by no white lines observed when a solid square was printed. On the other hand, ink **3B** showed a few white streaks, indicating missed or misdirected ink drops.

### Example 8: Draw Down Optical Density

This example contrasts dispersion **1B** which contains carbon black **B** modified with PABA only and dispersion **6B** which contains carbon black **B** modified with PABA and TPMA. Dispersions **1B** and **6B** were diluted to 5% with water and were drawn down on Xerox 4024 paper using a 3 mil Bird applicator with a Byk-Gardner automatic draw down device. The resulting film was measured for optical density using a MacBeth 915 optical densitometer. The results are reported in Table 6.

**Table 6.**

| Optical Density (Drawdown) | |
|---|---|
| Dispersion ID | Optical Density |
| **1B** | 1.84 |
| **6B** | 1.77 |

Dispersion **6B** has a lower optical density compared to **1B,** possibly due to being more penetrating into the paper.

Other embodiments of the present invention will be apparent to those skilled in the art from consideration of the specification and practice of the present invention disclosed herein. It is intended that the specification and examples be considered as exemplary only, with the true scope and spirit of the present invention being indicated by the following claims.

## Claims

1. An ink composition comprising a) at least one ink vehicle and b) at least one carbon product having a BET surface area of from 900 to 2200 m²/g.

2. The ink composition of claim 1, wherein said BET surface area is from about 1000 to about 2000 m²/g.

3. The ink composition of claim 1, wherein said ink composition is an inkjet ink composition.

4. An ink composition comprising a) at least one ink vehicle and b) at least one modified carbon product comprising a carbon product having attached at least one organic group, and wherein said carbon product has a BET surface area of from 900 to 2200 m²/g.

5. The ink composition of claim 4, wherein said BET surface area is from about 1000 to about 2000 m²/g.

6. The ink composition of claim 4, wherein said organic group comprises at least one C₁-C₂₀ alkyl group.

7. The ink composition of claim 4, wherein said organic group comprises at least one aromatic group.

8. The ink composition of claim 4, wherein said organic group is polymeric.

9. The ink composition of claim 4, wherein said organic group comprises at least one C₁-C₂₀ alkyl group or at least one aromatic group, wherein either group is directly attached to the carbon product.

10. The ink composition of claim 4, wherein said organic group is substituted with at least one ionic group, ionizable group, or both.

11. The ink composition of claim 4, wherein said carbon product is carbon black, graphite, vitreous carbon, finely-divided carbon, activated charcoal, activated carbon, or mixtures thereof.

12. The ink composition of claim 11, wherein said carbon product is carbon black.

13. The ink composition of claim 4, wherein said carbon product has a DBP of at least about 50 to about 400 cc/100g.

14. The ink composition of claim 13, wherein said carbon product has a DBP of from about 100 to about 360 cc/100g.

15. The ink composition of claim 4, wherein said ink composition is an inkjet ink composition.

16. An inkjet recording method, comprising the step of applying to a recording medium ink droplets discharged from orifices of an inkjet recording, wherein said ink droplets are formed from the inkjet ink composition of claim 3 or claim 15.

17. A method for increasing the optical density, the intercolor bleed resistance, or the gloss of a inkjet ink, comprising the step of incorporating into the inkjet ink a carbon product having a BET surface area of from 900 to 2200 m²/g.

18. A method for increasing the optical density, the intercolor bleed resistance, or the gloss of a inkjet ink, comprising the step of incorporating into the inkjet ink a modified carbon product comprising a carbon product having attached at least one organic group, wherein said carbon product has a BET surface area of from 900 to 2200 m²/g.

19. The method of claim 18, wherein said organic group is substituted with at least one ionic group, ionizable group, or both.

## Patentansprüche

1. Tintenzusammensetzung, umfassend a) mindestens ein Tintenvehikel und b) mindestens ein Kohlenstoffprodukt, das eine BET Oberfläche von 900 bis 2200 m²/g aufweist.

2. Tintenzusammensetzung nach Anspruch 1, wobei die BET Oberfläche von etwa 1000 bis etwa 2000 m²/g beträgt.

3. Tintenzusammensetrung nach Anspruch 1, wobei die Tintenzusammensetzung eine Tintenstrahltintenzusammensetzung ist.

4. Tintenzusammensetzung, umfassen a) mindestens ein Tintenvehikel und b) mindestens ein modifiziertes Kohlenstoffprodukt, das ein Kohlenstoffprodukt umfasst, an das mindestens eine organische Gruppe gebunden ist, und wobei das Kohlenstoffprodukt eine BET Oberfläche von 900 bis etwa 2200 m²/g aufweist.

5. Tintenzusammensetzung nach Anspruch 4, wobei die BET Oberfläche von etwa 1000 bis etwa 2000 m²/g beträgt.

6. Tintenzusammensetzung nach Anspruch 4, wobei die organische Gruppe mindestens eine C₁- bis C₂₀-Alkylgruppe umfasst.

7. Tintenzusammensetzung nach Anspruch 4, wobei die organische Gruppe mindestens eine aromatische Gruppe umfasst.

8. Tintenzusammensetzung nach Anspruch 4, wobei die organische Gruppe polymer ist.

9. Tintenzusammensetzung nach Anspruch 4, wobei die organische Gruppe mindestens eine C₁- bis C₂₀-Alkylgruppe oder mindestens eine aromatische Gruppe umfasst, wobei jede Gruppe an das Kohlenstoffprodukt direkt gebunden ist.

10. Tintenzusammensetzung nach Anspruch 4, wobei die organische Gruppe mit mindestens einer ionischen Gruppe, ionisierbaren Gruppe oder beiden substituiert ist.

11. Tintenzusammensetzung nach Anspruch 4, wobei das Kohlenstoffprodukt Ruß, Graphit, glasartiger Kohlenstoff, fein zerteilter Kohlenstoff, aktivierte Holzkohle, aktivierter Kohlenstoff oder Gemische davon ist.

12. Tintenzusammensetzung nach Anspruch 11, wobei das Kohlenstoffprodukt Ruß ist.

13. Tintenzusammensetzung nach Anspruch 4, wobei das Kohlenstoffprodukt einen DBP von mindestens etwa 50 bis etwa 400 cm³/100g aufweist.

14. Tintenzusammensetzung nach Anspruch 13, wobei das Kohlenstoffprodukt einen DBP von etwa 100 bis etwa 360 cm³/100g aufweist.

15. Tintenzusammensetzung nach Anspruch 4, wobei die Tintenzusammensetzung eine Tintenstrahltintenzusammensetzung ist.

16. Tintenstrahl-Aufzeichnungsverfahren, das den Schritt umfasst, dass auf ein Aufzeichnungsmedium Tintentröpfchen aufgebracht werden, die aus Öffnungen eines Tintenstrahl-Aufzeichnungsgeräts austreten, wobei die Tintentröpfchen aus der Tintenstrahl-Tintenzusammensetzung nach Anspruch 3 oder Anspruch 15 gebildet sind.

17. Verfahren zum Erhöhen der optischen Dichte, der Beständigkeit gegenüber Ausbluten zwischen den Farben, oder des Glanzes einer Tintenstrahltinte, das den Schritt umfasst, dass man in die Tintenstrahltinte ein Kohlenstoffprodukt einarbeitet, dass eine BET Oberfläche von 900 bis 2200 m²/g aufweist.

18. Verfahren zum Erhöhen der optischen Dichte, der Beständigkeit gegenüber Ausbluten zwischen den Farben oder des Glanzes einer Tintenstrahltinte, das den Schritt umfasst, dass man in die Tintenstrahltinte ein modifiziertes Kohlenstoffprodukt einarbeitet, das ein Kohlenstoffprodukt umfasst, an das mindestens eine organische Gruppe gebunden ist, wobei das Kohlenstoffprodukt eine BET Oberfläche von 900 bis 2200 m²/g aufweist.

19. Verfahren nach Anspruch 18, wobei die organische Gruppe mit mindestens einer ionischen Gruppe, einer ionisierbaren Gruppe, oder beiden substituiert ist.

## Revendications

1. Une composition d'encre comprenant a) au moins un véhicule d'encre et b) au moins un produit de carbone présentant une aire de surface BET de 900 à 2200 m²/g.

2. La composition d'encre de la revendication 1, dans laquelle ladite aire de surface BET est d'environ 1000 à environ 2000 m²/g.

3. La composition d'encre de la revendication 3, dans laquelle ladite composition d'encre est une composition d'encre à jet d'encre.

4. Une composition d'encre comprenant a) au moins un véhicule d'encre b) au moins un produit de carbone modifié comprenant un produit de carbone auquel est fixé au moins un groupe organique, et où ledit produit de carbone a une aire de surface BET de 900 à 2200 m²/g.

5. La composition d'encre de la revendication 4, dans laquelle ladite aire de surface BET est d'environ 1000 à environ 2000 m²/g.

6. La composition d'encre de la revendication 4, dans laquelle ledit groupe organique comprend au moins un groupe alkyle en C₁-C₂₀.

7. La composition d'encre de la revendication 4, dans laquelle ledit groupe organique comprend au moins un groupe aromatique.

8. La composition d'encre de la revendication 4, dans laquelle ledit groupe organique est un groupe organique polymère.

9. La composition d'encre de la revendication 4, dans laquelle ledit groupe organique comprend au moins un groupe alkyle en C₁-C₂₀ ou au moins un groupe aromatique, l'un ou l'autre groupe étant fixé directement au produit de carbone.

10. La composition d'encre de la revendication 4, dans laquelle ledit groupe organique est substitué avec au moins un groupe ionique, un groupe ionisable, ou les deux.

11. La composition d'encre la revendication 4, dans laquelle ledit produit de carbone est du noir de carbone, du graphique, du carbone vitreux, du carbone finement divisé, du charbon de bois activé, du carbone activé, ou des mélanges de ceux-ci.

12. La composition d'encre de la revendication 11, dans laquelle ledit produit de carbone est du noir de carbone.

13. La composition d'encre de la revendication 4, dans laquelle ledit produit de carbone à un DBP d'au moins environ 50 à environ 400 cm³/100 g.

14. La composition d'encre de la revendication 13, dans laquelle ledit produit de carbone à un DBP d'environ 100 à environ 360 cm³/100 g.

15. La composition d'encre de la revendication 4, dans laquelle ladite composition d'encre est une composition d'encre à jet d'encre.

16. Un procédé d'enregistrement à jet d'encre, comprenant l'étape consistant à appliquer, à un support d'enregistrement, des gouttelettes déchargées des orifices d'un enregistrement à jet d'encre, lesdites gouttelettes étant formées à partir de la composition d'encre à jet d'encre de la revendication 3 ou de la revendication 15.

17. Un procédé pour augmenter la densité optique, la résistance de déteintage intercouleur, ou l'éclat d'une encre à jet d'encre, comprenant l'étape consistant à incorporer dans l'encre à jet d'encre un produit de carbone ayant une aire de surface BET de 900 à 2200 m²/g.

18. Un procédé pour augmenter la densité optique, la résistance de déteintage intercouleur, ou l'éclat d'une encre à jet d'encre, comprenant l'étape consistant à incorporer dans l'encre à jet d'encre un produit de carbone modifié comprenant un produit de carbone auquel est fixé au moins un groupe organique, où ledit produit de carbone a une aire de surface BET de 900 à 2200 m²/g.

19. le procédé de la revendication 18, dans lequel ledit groupe organique est substitué avec au moins un groupe ionique, un groupe ionisable, ou les deux.
